# EUROPEAN PATENT APPLICATION

(11) **EP 4 708 085 A1**
(43) Date of publication of application: **11.03.2026**
(21) Application number: 24881613.4
(22) Date of filing: 23.10.2024
(51) Int. Cl.: G06F 21/10

(54) **CARD RENDERING METHOD AND APPARATUS**

(30) Priority: 28.10.2023 CN 202311433633
(71) Applicant: Huawei Technologies Co., Ltd., Shenzhen, Guangdong 518129 (CN)
(72) Inventor: DU, Jingcheng, Shenzhen, Guangdong 518129 (CN); JIANG, Dayuan, Shenzhen, Guangdong 518129 (CN); WANG, Genliang, Shenzhen, Guangdong 518129 (CN)
(74) Representative: Isarpatent
(86) International application number: PCT/CN2024/126588
(87) International publication number: WO 2025/087248

(57) **Abstract**

This application provides a card rendering method and an apparatus, and relates to the field of terminal technologies. In this application, security levels of all cards to be drawn can be classified according to a specific rule, and a same standalone card rendering service process is used to complete rendering and drawing of cards of a same security level, to completely isolate data resource spaces between cards of different security levels, and further improve application security. The method includes: An electronic device receives a first operation of creating a first card, where a security level of the first card is a first security level; drawing the first card by using a first rendering process; receiving a second operation of creating a second card, where a security level of the second card is a second security level; and drawing the second card by using a second rendering process, where the first rendering process and the second rendering process are independent of each other, and finally displaying the first card and the second card in an interface.

## Description

### TECHNICAL FIELD

This application relates to the field of mobile terminal technologies, and in particular, to a card rendering method and an apparatus.

### BACKGROUND

With continuous development of communication technologies, electronic devices (for example, smartphones) are increasingly popular, diversified, and intelligent, and availability and friendliness of human-machine interaction interfaces for interaction between users and electronic devices are also increasingly concerned. A conventional home screen allows a user to add a component card to the home screen. Card rendering and a UI process are usually isolated, but all cards are rendered by using a same rendering process. As a result, the rendered cards inherit permission of the rendering process, resulting in a security problem.

### SUMMARY

Embodiments of this application provide a card rendering method and an apparatus. According to the card rendering method provided in this application, different standalone rendering service processes may be used to render cards of different security levels, so that running environment resource data of the cards of the different security levels is completely isolated. In this way, when a part of card applications are attacked by malicious code, other applications are not affected, and application security and user experience are improved.

According to a first aspect, an embodiment of this application provides a card rendering method, applied to a electronic device, including: receiving a first operation of creating a first card, where content of the first card is from a first application, and a security level of the first card is a first security level; drawing an interface of the first card by using a corresponding first process matched based on the first security level; receiving a second operation of creating a second card, where content of the second card is from a second application, and a security level of the second card is a second security level; and drawing an interface of the second card by using a corresponding second process matched based on the second security level. A card obtains a corresponding card security level based on a specific policy. Card rendering is performed on cards of a same security level by using a same standalone card rendering service process. The first operation and the second operation may be human-machine interaction operations in any form. In this way, data resource spaces of cards of different security levels can be completely isolated from each other through process isolation, to improve card security. Because different card data is from different applications, application security is further improved.

In the foregoing embodiment, cards are classified into a type-1 card and a type-2 card based on a security level. The type-1 card is a first security level card with a highest security level, and the type-2 card is a second security level card with a lower security level. The first process is responsible for rendering all type-1 cards in the electronic device, and the second process is responsible for rendering all type-2 cards in the electronic device. In this way, cards of a same security level are rendered by using a same standalone card rendering service process, to save a specific memory resource, and manage and control a quantity of processes on the premise of security.

In the foregoing embodiment, the electronic device needs to obtain a security level of a to-be-rendered card. In some embodiments, the method includes: The electronic device stores a card security level corresponding to an application, the electronic device directly obtains the security level of the first card from the device, and the electronic device directly obtains the security level of the second card from the device. In this way, the device can directly identify the security level of the to-be-rendered card in any scenario. For example, when the device is disconnected from a network, the security level of the card may also be successfully identified, and a corresponding standalone card rendering service process is matched to complete card rendering.

In the foregoing embodiment, the electronic device needs to obtain a security level of a to-be-rendered card. In some embodiments, the method includes: A server side stores card security levels corresponding to all different applications, the electronic device directly sends a security level query request for the first card and a security level query request for the second card to the server side, and the server separately returns the card security levels corresponding to the first card and the second card, or the server side directly sends the card security levels corresponding to the first card and the second card to a device side for receiving. In this way, security level information of the card needs to be stored on the server side. In one aspect, memory space pressure and computing pressure on the device side are reduced, and in another aspect, when the device is replaced, a card security level matching policy of an old device does not change.

In the foregoing embodiment, the electronic device needs to obtain a security level of a to-be-rendered card. An application that provides a data source for the card is referred to as a card provider application, the first application is a provider application of the first card, and the second application is a provider application of the second card. Because card data is from a provider application, in some embodiments, the provider application and the card security level directly form a correspondence. The device determines a provider application of the to-be-rendered card, finds, by using the provider application, a card level corresponding to the provider application in the correspondence, and then renders the card by using a standalone card rendering service process matching the security level. In this way, a security level of the provider application is a security level of the card, so that the device can obtain the corresponding security level when learning of the card provider application, and can directly determine the security level of the card based on content of the application more intuitively.

In the foregoing embodiment, the electronic device needs to obtain a security level of a to-be-rendered card. An application that provides a data source for the card is referred to as a card provider application, the first application is a provider application of the first card, and the second application is a provider application of the second card. In some embodiments, the method includes: Card provider applications have different categories, where common categories include financial management, fitness and health, audio and video, and the like. Different application categories correspond to different card levels accordingly. An application set and an application category form a second correspondence, and an application category and a card security level form a third correspondence. There is at least one application in the application set, and the first application belongs to the application set. A corresponding application category of the provider application of the first card is determined based on the second correspondence, that is, an application category to which the first application belongs, and then the security level of the first card is determined based on the third correspondence. A corresponding application category of the provider application of the second card is determined based on the second correspondence, that is, an application category to which the second application belongs, and then the security level of the second card is determined based on the third correspondence. The security level of the first card is different from the security level of the second card. In this way, card security levels can be classified based on the application category, and a simple method for classifying card security levels is provided. For example, all applications in a financial management application category are strongly associated with transaction money, and have a highest application security requirement. Therefore, a corresponding card security level is set to a highest first security level.

In the foregoing embodiment, the electronic device needs to obtain a security level of a to-be-rendered card. In some embodiments, the method includes: An application installation package carries security level information of a card, and a security level of a corresponding card may be obtained by parsing the installation package; and the electronic device obtains the security level of the first card by parsing an installation package of the first application, and the electronic device obtains the security level of the second card by parsing an installation package of the second application. In this way, a developer may determine the security level of the card during development based on a development requirement, and subsequently, a user can directly match a corresponding standalone card rendering service process based on the card security level in the application installation package of the card provider to render the card.

In the foregoing embodiment, in some embodiments, the security level of the first card may be changed from the first security level to the second security level. A system side may update the security level of the first card from the first security level to the second security level, or the user may set the security level of the first card to the second security level, or the server side changes the card security level. In this way, the security level of the card may be changed with actual use, to ensure flexibility of a card rendering matching process.

With reference to some embodiments of the first aspect, in some embodiments, the device receives a third operation of creating a third card, where a security level of the third card is the first security level; draws the third card by using a third rendering process, and the third rendering process is different from both the first rendering process and the second rendering process; and finally displays the third card in a device interface. Data of the third card is from a third application. Therefore, the third application is a provider application of the third card. Even if both the security levels of the first card and the third card are the first security level, two completely standalone card rendering service processes are still used to separately draw the two cards. In this way, the cards of the first security level are isolated by using processes, so that data resource spaces are completely isolated, and security between the cards of the first level is further improved.

In the foregoing embodiment, in some embodiments, data of the first card is from the first application, data of the second card is from the second application, and data of the third card is from the third application. The first application, the second application, and the third application all are different applications. In this way, card display isolation ensures isolation of data resource spaces between applications, and further improves application security.

In the foregoing embodiment, in some embodiments, the first rendering process and the second rendering process have different rendering capabilities, and the first rendering process may render more animation effects. Different animation features may be generated by setting animation attributes of controls, such as a translation animation, a transparent animation, and a looping animation. Setting of a part of animation attributes of the controls has great impact on card display and device power consumption. For example, setting of control transparency needs to be strictly managed and controlled. Therefore, the part of animation attributes of the controls are open only to a card of a high card security level for setting. For example, the first rendering process may render special animation effects such as the transparent animation and the looping animation, but the second rendering process does not have a capability of rendering these animation effects. In this way, different rendering processes have different rendering capabilities, so that different cards may have different card animation effects. For the card with high security, some special animation effects may be provided for use, to bring better visual experience.

In the foregoing embodiment, in some embodiments, a first display area and a second display area belong to a same application of the electronic device. For example, the first display area is displayed on a leftmost screen, and the second display area is on a home screen of the device. In this way, content display of any card user application on the device can be rendered, so that security of card rendering of all applications on the device can be improved according to a security level classification method.

According to a second aspect, an embodiment of this application provides an electronic device. The electronic device includes one or more processors and a memory. The memory is coupled to the one or more processors. The memory is configured to store computer program code. The computer program code includes computer instructions. The one or more processors invoke the computer instructions to enable the electronic device to perform the following operations: The electronic device determines that an interface of a first card is displayed in a first display area and an interface of a second card is displayed in a second display area, where content of the first card is from a first application, a first process draws the interface of the first card, content of the second card is from a second application, and a second process draws the interface of the second card; and a card obtains a corresponding card security level based on a specific policy, where a security level of the first card is a first security level, and a security level of the second card is a second security level.

In the foregoing embodiment, the first security level has a highest security requirement, and the second security level is lower than the first security level. The security level of the first card is equivalent to a security level of the first application, and the security level of the second card is equivalent to a security level of the second application, that is, a security level of a card is equivalent to a security level of a card provider application.

With reference to some embodiments of the second aspect, in some embodiments, the one or more processors are specifically configured to invoke the computer instructions to enable the electronic device to perform the following operations: Cards are classified into a type-1 card and a type-2 card based on a security level. The type-1 card is a first security level card with a highest security level, and the type-2 card is a second security level card with a lower security level. The first process is responsible for rendering all type-1 cards in the electronic device, and the second process is responsible for rendering all type-2 cards in the electronic device.

With reference to some embodiments of the second aspect, in some embodiments, the one or more processors are specifically configured to invoke the computer instructions to enable the memory of the electronic device to perform the following operation: The memory stores a card security level corresponding to an application.

In the foregoing embodiment, the one or more processors are specifically configured to invoke the computer instructions to enable the memory of the electronic device to perform the following operation: directly obtaining the security level of the first card and the security level of the second card from the memory of the device.

With reference to some embodiments of the second aspect, in some embodiments, the one or more processors are specifically configured to invoke the computer instructions to enable the electronic device to perform the following operation: directly obtaining or receiving the security level of the first card and the security level of the second card from a server side.

With reference to some embodiments of the second aspect, in some embodiments, the one or more processors are specifically configured to invoke the computer instructions to enable the memory of the electronic device to perform the following operation: storing a first correspondence list formed by a card security level and an application.

With reference to some embodiments of the second aspect, in some embodiments, the one or more processors are specifically configured to invoke the computer instructions to enable the memory of the electronic device to perform the following operation: storing a second correspondence list formed by an application and an application category, and a third correspondence list formed by a card security level and an application category.

In the foregoing embodiment, the one or more processors are specifically configured to invoke the computer instructions to enable the memory of the electronic device to perform the following operations: determining the security level of the corresponding first card based on a first application category, and determining the security level of the second card based on a second application category, where the security level of the first card is different from the security level of the second card.

With reference to some embodiments of the second aspect, in some embodiments, the one or more processors are specifically configured to invoke the computer instructions to enable the electronic device to perform the following operations: An installation package may be parsed to obtain a security level of a corresponding card; the electronic device obtains the security level of the first card by parsing an installation package of the first application; and the electronic device obtains the security level of the second card by parsing an installation package of the second application.

With reference to some embodiments of the second aspect, in some embodiments, the one or more processors are specifically configured to invoke the computer instructions to enable the electronic device to perform the following operations: receiving a third operation of creating a third card, where the third card belongs to a type-1 card, and drawing an interface of the third card by using a third process.

According to a third aspect, an embodiment of this application provides a computer-readable storage medium, including instructions. When the instructions are run on an electronic device, the electronic device is enabled to perform the method described in any possible implementation of the first aspect and the second aspect.

According to a fourth aspect, an embodiment of this application provides a computer program product including instructions. When the computer program product runs on an electronic device, the electronic device is enabled to perform the method described in any possible implementation of the first aspect and the second aspect.

It may be understood that the electronic device provided in the second aspect, the computer storage medium provided in the third aspect, and the computer program product provided in the fourth aspect are all configured to perform the method provided in embodiments of this application. Therefore, for beneficial effect that can be achieved by the electronic device, the computer storage medium, and the computer program product, refer to the beneficial effect in the corresponding method. Details are not described herein again.

### BRIEF DESCRIPTION OF DRAWINGS

FIG. 1 is a diagram of a hardware structure of a terminal according to an embodiment of the present invention;
FIG. 2 is a diagram of a software structure of a terminal according to an embodiment of the present invention;
FIG. 3 is a schematic flowchart of configuring basic information of an application when the application is released according to an embodiment of the present invention;
FIG. 4 is an example diagram of basic information configuration of an application that needs to be completed when the application is released according to an embodiment of the present invention;
FIG. 5 is another example diagram of basic information configuration of an application that needs to be completed when the application is released according to an embodiment of the present invention;
FIG. 6 is another example diagram of basic information configuration of an application that needs to be completed when the application is released according to an embodiment of the present invention;
FIG. 7 is a diagram of a card manager service (FMS) according to an embodiment of the present invention;
FIG. 8 is a diagram of a card provider according to an embodiment of the present invention;
FIG. 9 is a diagram of a card creation implementation principle according to an embodiment of the present invention;
FIG. 10 is a diagram of a card rendering principle according to an embodiment of the present invention;
FIG. 11 is a diagram of a specific implementation of generating a card in a card rendering manner shown in FIG. 10 according to the present invention;
FIG. 12 is a diagram of another card rendering principle according to an embodiment of the present invention;
FIG. 13 is a diagram of a specific implementation of generating a card in a card rendering manner shown in FIG. 12 according to the present invention;
FIG. 14 is a diagram of specific steps of another card rendering method according to an embodiment of the present invention; and
FIG. 15 is a diagram of specific steps of another card rendering method according to an embodiment of the present invention.

### DESCRIPTION OF EMBODIMENTS

Currently, an application market provides more types of services for users, including various services such as fitness and health, learning and education, daily office, photographing and beautification, social communication, news reading, practical tool, theme personalization, audio and video entertainment, and financial management, to meet various requirements of the current users.

To better present service content, a mobile terminal displays the service content in a form of a card/component/display component/display control/control/application widget/plug-in (collectively referred to as a "card"). A card tool component may display displayed information of an application. A user may also tap the component to trigger an electronic device to directly display an application interface corresponding to the displayed information. The card can be used to present important information or an operation of an application in front, to implement direct service access and reduce an experience hierarchy.

In a common solution, a rendering process of a card and a UI process are isolated, to ensure that running of the UI process is not affected when the rendering process crashes. However, all card rendering processes are performed by using a same standalone card rendering service process. A virtual machine in a running state ensures isolation between cards. If malicious code attacks the virtual machine and the virtual machine is insecure, all card rendering is still insecure in this rendering manner, and it cannot be ensured that data resources and statuses of cards to be rendered and displayed between different applications are isolated from each other. In addition, this rendering manner also causes same permission of all rendering, and required permissions cannot be provided for some special cards.

Data of a part of applications is displayed or a corresponding service is provided. All component rendering is performed in one process. Different applications have different security privacy. For example, financial data has a higher security requirement, and a malicious code attack may cause many problems.

For example, a malicious developer may obtain, by using a same rendering process, data to be rendered and displayed of another application, causing a security problem of data leakage of a third-party application.

For another example, any third-party application has permission to obtain code of any other application. When obtaining rendering permission of another third-party application, the malicious developer may randomly modify displayed information of another component.

For another example, a malicious developer may specifically construct a malicious component, and when a user previews or operates the component, the malicious component is triggered, causing a malicious operation inside a mobile phone.

In the foregoing scenarios, a security problem caused by non-isolation of rendering processes between different applications is involved.

In view of this, this application provides a display component multi-level isolation system and method, to classify display component cards of applications into different security levels, so that display component cards of different security levels are rendered by using different rendering processes, to ensure that display component cards with different security level requirements cannot be maliciously read or modified, improve card security, and effectively prevent an attack behavior of a malicious developer.

"A plurality of" in embodiments of this application means "greater than or equal to two". It should be noted that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. In the descriptions of the embodiments of this application, terms such as "first" and "second" are only used for distinction and description, but cannot be understood as an indication or implication of relative importance, and cannot be understood as an indication or implication of a sequence.

The following describes an electronic device configured to perform an interface display method provided in embodiments of this application, a graphical user interface (graphical user interface, GUI) used for the electronic device, and embodiments used for using the electronic device. In some embodiments of this application, the electronic device may include various portable terminals including a display, for example, a mobile phone, a tablet computer, and a large screen device. An example embodiment of the portable electronic device includes but is not limited to a portable electronic device equipped with iOS^{®}, Android^{®}, Microsoft^{®}, HarmonyOS^{®}, OpenHarmony^{®}, or another operating system. The portable electronic device may alternatively include more other electronic devices, for example, a digital camera, a smart speaker, a vehicle-mounted device (which may also be referred to as a head unit), a notebook computer, an ultra-mobile personal computer (ultra-mobile personal computer, UMPC), a handheld computer, a netbook, a personal digital assistant (personal digital assistant, PDA), a wearable electronic device, a virtual reality device, and other IoT (internet of things, internet of things) devices. It should be further understood that in some other embodiments of this application, the electronic device may not be the portable electronic device, but a smart home device such as a desktop computer with a display, a smart refrigerator with a display, or a smart air conditioner.

In embodiments of this application, a "terminal device", an "electronic device", a "mobile terminal", a "terminal", and an "apparatus" all represent a same meaning, and several expressions may be interchanged.

Terms "including", "having", and any other variant thereof mentioned in descriptions of embodiments of this application are intended to cover non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in embodiments of this application, the term such as "example" or "for example" is used to represent giving an example, an illustration, or descriptions. Any embodiment or design solution described as an "example" or "for example" in embodiments of this application should not be explained as being more preferred or having more advantages than another embodiment or design solution. Exactly, use of the word "example", "for example", or the like is intended to present a related concept in a specific manner.

An application (application, app) in embodiments of this application is a software application that can implement one or more specific functions. The application mentioned in this application may be an application preset in a terminal device, or may be an application downloaded from another network or obtained and installed in another manner by a user in a process of using an electronic device.

An operation interface in embodiments of this application may also be referred to as a user interface (User Interface, UI), a graphical interface, or another name. The operation interface is an interface for human-machine interaction between an electronic device and a user. The electronic device may display and output related information through the interface, for example, display an image/text/data, and may also receive a user operation through the operation interface, for example, touch/tap/touch and hold/double-tap/drag/enter. The user interface is usually represented in a form of a graphical user interface (graphic user interface, GUI), which is a user interface displayed in a graphical manner and related to computer operations. The user interface may be a visual interface element, for example, a text, an icon, a button, a menu, a tab, a text box, a dialog box, a status bar, a navigation bar, or a widget, that is displayed on a display of the electronic device.

The interface is used as a medium interface for interaction and information exchange between an application and a user. Each time a vertical synchronization signal (Vsync-APP) arrives, the electronic device needs to generate an application interface for a foreground application. A frequency of the vertical synchronization signal is related to a refresh rate of a screen of the electronic device. For example, the frequency of the vertical synchronization signal is the same as the refresh rate of the screen of the electronic device.

To be specific, each time before content displayed on the screen is refreshed, the electronic device needs to generate the application interface for the foreground application. In this case, when the screen is refreshed, the newly generated application interface is displayed to the user.

An interaction event in embodiments of this application is a step of performing an interface operation by the user. The user may perform an operation such as tap/sliding/touch/double-tap/zooming/touch and hold/dragging, and may trigger data refresh of an application/application startup/application interface jump/application launch/jump of another application/data transmission between applications/data transmission between a mobile terminal and a server, or the like.

A card component in embodiments of this application is an interface display form, and may be embedded into another application (for example, a home screen) as a part of interface display and may update a view. A developer can release a new card through a card manager service module. The card can display text/an image/data information, and also support a function of interaction with the user, such as refreshing page data/launching a page/sending a message, or the like.

The following clearly and completely describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

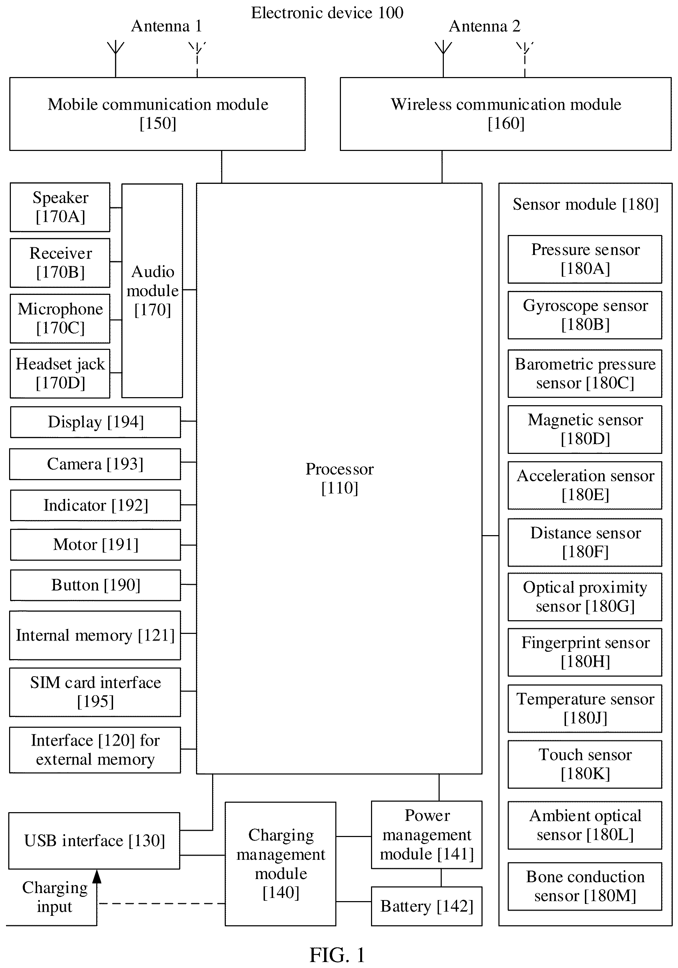

FIG. 1 is a diagram of a structure of an electronic device 100.

The electronic device 100 is used as an example below to describe embodiments in detail. It should be understood that the electronic device 100 shown in FIG. 1 is merely an example, and the electronic device 100 may have more or fewer components than those shown in FIG. 1, or may combine two or more components, or may have different component configurations. Components shown in the figure may be implemented by hardware, software, or a combination of hardware and software that includes one or more signal processing and/or application-specific integrated circuits.

The electronic device 100 may include at least one of a mobile phone, a foldable electronic device, a tablet computer, a desktop computer, a laptop computer, a handheld computer, a notebook computer, an ultra-mobile personal computer, a netbook, a cellular phone, a personal digital assistant, an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device 100 is not specifically limited in embodiments of this application.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera module 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal, to complete control on instruction fetching and instruction execution.

A memory may be further disposed in the processor 110, and is configured to store instructions and data. In some embodiments, the memory in the processor 110 may be a cache. The memory may store instructions or data that has been used or frequently used by the processor 110. If the processor 110 needs to use the instructions or the data, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module such as a touch sensor, an audio module, a wireless communication module, a display, and a camera through at least one of the foregoing interfaces.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from an interface connection manner in this embodiment, or use a combination of a plurality of interface connection manners.

The USB interface 130 is an interface complying with a USB standard specification, and may be configured to connect the electronic device 100 and a peripheral device, and may be specifically a mini USB interface, a micro USB interface, a USB type-C interface, or the like. The USB interface 130 may be configured to connect to a charger, so that the charger charges the electronic device 100, or may be configured to connect to another electronic device, to implement data transmission between the electronic device 100 and the another electronic device. The USB interface 130 may alternatively be configured to connect to a headset, to output, through the headset, an audio stored in the electronic device. The interface may be further configured to connect to another electronic device, for example, a VR device. In some embodiments, standard specifications of the universal serial bus may be USB 1.x, USB2.0, USB3.x, and USB4.

The charging management module 140 is configured to receive a charging input of the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 when the battery 142 is charged.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera module 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the electronic device 100, the antenna 1 and the mobile communication module 150 are coupled, and the antenna 2 and the wireless communication module 160 are coupled, so that the electronic device 100 can communicate with a network and another electronic device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

The electronic device 100 may implement an image shooting function via the camera module 193, the ISP, the video codec, the GPU, the display 194, the application processor AP, the neural-network processing unit NPU, and the like.

The camera module 193 may be configured to collect color image data and depth data of a photographed object. The ISP may be configured to process the color image data collected by the camera module 193. In some embodiments, the camera module 193 may include a color camera module and a 3D sensing module.

The interface 120 for external memory may be used to connect to an external storage card, for example, a micro SD card, to extend a storage capability of the electronic device 100. The external memory card communicates with the processor 110 through the interface 120 for external memory, to implement a data storage function. For example, files such as music and a video are stored in the external memory card. Alternatively, files such as music and a video are transmitted from the electronic device to the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data or a phone book) created in a process of using the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to perform various function methods and data processing of the electronic device 100.

The electronic device 100 may implement an audio function, for example, music playing and recording, through the audio module 170, the speaker 170A, the receiver 170B, the microphone 170C, the headset jack 170D, the application processor.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music or output an audio signal of a hands-free call through the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal.

The gyroscope sensor 180B may be configured to determine a motion posture of the electronic device 100.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip cover leather case through the magnetic sensor 180D.

The acceleration sensor 180E may detect a value of acceleration of the electronic device 100 in all directions (usually on three axes).

The distance sensor 180F is configured to measure a distance.

The ambient optical sensor 180L may be configured to sense ambient light brightness.

The fingerprint sensor 180H is configured to collect a fingerprint.

The temperature sensor 180J is configured to detect a temperature.

The touch sensor 180K is also referred to as a "touch component". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a position different from that of the display 194.

The bone conduction sensor 180M may obtain a vibration signal.

The button 190 may include a power button, a volume button, and the like.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

A software system of the electronic device 100 may have a layered architecture, an event-driven architecture, a microkernel architecture, a micro service architecture, or a cloud architecture. In this embodiment of this application, an Android system with a layered architecture is used as an example to describe a software structure of the electronic device 100.

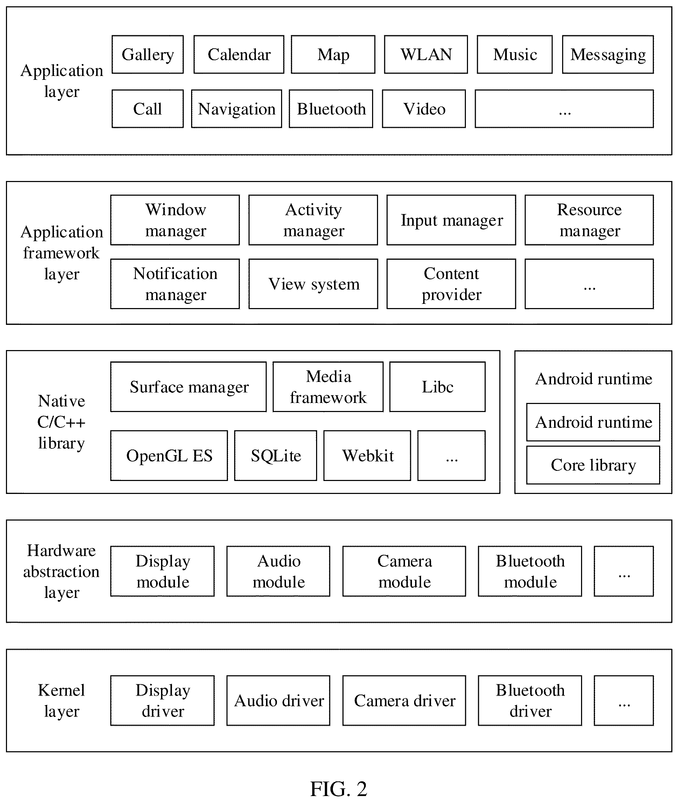

FIG. 2 is a block diagram of a software structure of an electronic device 100 according to an embodiment of this application.

In a layered architecture, software is divided into several layers, and each layer has a clear role and task. The layers communicate with each other through a software interface. In some embodiments, an Android system is divided into five layers: an application layer, an application framework layer, Android runtime (Android runtime, ART) and a native C/C++ library, a hardware abstraction layer (Hardware Abstraction Layer, HAL), and a kernel layer from top to bottom.

The application layer may include a series of application packages.

As shown in FIG. 2, the application packages may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a resource manager, a notification manager, an activity manager, an input manager, and the like.

The window manager provides a window manager service (Window Manager Service, WMS), and the WMS may be used for window management, window animation management, and surface management, and serve as a transit point for an input system.

The content provider is configured to: store and obtain data, and enable the data to be accessed by an application. The data may include a video, an image, an audio, calls that are made and received, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, an alert tone is made, an electronic device vibrates, or an indicator blinks.

The activity manager may provide an activity manager service (Activity Manager Service, AMS). The AMS may be used to start, switch, and schedule system components (for example, activities, services, content providers, and broadcast receivers), and manage and schedule application processes.

The input manager may provide an input manager service (Input Manager Service, IMS), and the IMS may be used for system input management, for example, a touchscreen input, a key input, and a sensor input. The IMS obtains an event from an input device node and allocates the event to an appropriate window through interaction with the WMS.

The Android runtime includes a core library and Android runtime. The Android runtime is responsible for converting source code into machine code. The Android runtime mainly includes an ahead of time (ahead of time, AOT) compilation technology and a just in time (just in time, JIT) compilation technology.

The core library is mainly used to provide functions of basic Java libraries, such as a basic data structure library, a mathematics library, an I/O library, a tool library, a database, and a network library. The core library provides the API for a user to develop an Android application.

A native C/C++ library may include a plurality of functional modules, such as a surface manager (surface manager), a media framework (Media Framework), libc, OpenGL ES, SQLite, and Webkit.

The surface manager is configured to manage a display subsystem, and provide fusion of 2D and 3D layers for a plurality of applications. The media framework supports playback and recording of audios and videos in a plurality of commonly used formats, static image files, and the like. The media library may support a plurality of audio and video encoding formats, for example, MPEG-4, H.264, MP3, AAC, AMR, JPG, and PNG. OpenGL ES provides drawing and manipulation of 2D and 3D graphics in the application. SQLite provides a lightweight relational database for the application of the electronic device 100.

The hardware abstraction layer runs in a user space (user space), encapsulates a kernel layer driver, and provides an interface for an upper layer to invoke.

The kernel layer is a layer between hardware and software. The kernel layer includes at least a display driver, a camera driver, an audio driver, and a sensor driver.

The following describes an example of a working procedure of software and hardware of the electronic device 100 with reference to a capture photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, to start the camera application. Then, the camera driver is started by invoking the kernel layer, and a static image or a video is captured through the camera module 193.

A security mechanism used by the electronic device 100 is a sandbox (sandbox) mechanism, and security between applications is protected to a maximum extent by using the sandbox mechanism. Each standalone process runs in a standalone sandbox to isolate a user running environment and ensure that applications do not interfere with each other. A core mechanism of the sandbox is standard process isolation and strict limitation on a file system permission. In a default state, different sandbox processes are limited in respective sandboxes, isolated from each other, and run independently.

In the present invention, a device needs to obtain a security level of a to-be-rendered card, to determine a corresponding matched card rendering service process.

There are a plurality of specific implementations in which the device obtains the card security level. This is not limited in this application. The device may obtain the card security level through parsing by using any internal module, or a server side may perform analysis, and directly feed back an analyzed card security level result to a terminal device side. Herein, an example in which a card manager server is used as a module for obtaining the card security level is used for description.

In a possible implementation of obtaining the card security level, when releasing an application in an application market, a developer needs to fill in card information, and the developer may select a card security level. An installation package of the application and the corresponding card security level are uploaded to a server by using the background of the application market. The application market provides a path for downloading the installation package of the application on the server, and also provides a path for downloading corresponding card security information. The electronic device may obtain card security level information corresponding to the installation package by using the downloading path in the application market. For example, the card information may be <cardname="com.example.dee", type="game", secure="first">. A card manager service module directly obtains the card security level based on a secure field by using the card information parsed during downloading.

In another possible implementation of obtaining the card security level, card security level information of an application is encapsulated in a configuration file of application development, and is written when an installation package is generated through compilation in an integrated development environment (Integrated Development Environment, IDE). For example, for an Android operating system, an Android operating system development tool (Android Studio) may be used as a development IDE, and a developer sets card security level information of an application when writing code in the IDE. When the installation package is generated through compilation in the IDE, the IDE may obtain card security level information of an installation package of each application and write the card security level information into a configuration file. In a process of downloading, installing, or running an application, a terminal device package parser may obtain the card security level information of the application in the configuration file of the application, and actively transmit or is passively requested to transmit the card security level information corresponding to the application to the card manager service module in an inter-process communication manner, so that the card manager service module determines the corresponding card security level.

In another possible implementation of obtaining the card security level, when a card provider sends display data of a card, a field carries security level information of the card. After receiving information from the card provider, the card manager service module parses out field content of the card security level information.

In another possible implementation of obtaining the card security level, when rendering is started on a card of an application, the card manager service module accesses a server through a communication interface, and directly obtains security level information of a current to-be-displayed card from the server.

A card provider application and a to-be-displayed card are in one-to-one matching correspondence. Therefore, a security level of the card is also equivalent to a security level of the provider application. Therefore, in all the foregoing implementations, the security level of the application may be directly set, and the security level of the card provider application is the corresponding card security level.

In another possible implementation of obtaining the card security level, a classification security level correspondence list between card security level information and card provider application category information is established, and a security level of the to-be-rendered card is determined by using a provider application category. The classification security level correspondence list may be replaced or refreshed, and may be stored on a terminal device side or may be stored on a server side. After obtaining an application category, the device parses out corresponding card security level information based on the correspondence list, so that the card manager service module obtains a corresponding card security level. Alternatively, the server may parse out a corresponding card security level based on the correspondence list, and the card manager service module obtains, from a cloud in an active query or passive receiving manner, the card security level information corresponding to the application.

For example, the provider application category and the card security level information form a mapping relationship. Cards are classified into two types based on the card security level: a type-1 card and a type-2 card. A security level requirement of the type-1 card is higher than that of the type-2 card.

Generally, different applications of various different types may be installed in the terminal device, for example, a fitness and health category (Keep/Huawei Health), a learning and education category (Youdao Dictionary/Zuoyebang), a daily office category (WPS Office/CamScanner), a photographing and beautification category (Meitu/Meitu Beauty Camera), a social communication category (WeChat/Messaging/Call), a news reading category (Toutiao/Phoenix News), a practical tool category (Home Screen Time/Daily Alarm), a theme personalization category (ChaoFan Walls/Kugou Ringtone), an audio and video entertainment category (iQIYI/Youku), and a financial management category (A financial APP/B securities APP). Generally, financial management applications have a higher running data security requirement. Such applications may be defined as high-security applications. When such applications are used as card providers, corresponding cards are a type of cards with a highest security level. The high-security application is usually an application having a high security level requirement, and requires a more secure running environment. Table 1 shows a direct mapping manner in which a card provider application is in one-to-one correspondence with a card security level.

**Table 1 Correspondence list 1 between an application category and a card security level**

| Application category | Card security level | Application example |
|---|---|---|
| Financial management category | Type-1 card | A financial APP B, B securities APP, C bank APP, and the like |
| Others (non-financial management) | Type-2 card | Calculator, alarm clock, and the like |

For example, the provider application category and the card security level information form a mapping relationship. Cards may alternatively be classified into three types based on the card security level: a type-1 card, a type-2 card, and a type-3 card. The type-1 card has a highest security level, and the type-3 card has a lowest security level. Table 2 shows a possible correspondence list.

**Table 2 Correspondence list 2 between an application category and a card security level**

| Application category | Card security level | Application example |
|---|---|---|
| Financial management category | Type-1 card | A finance, B securities, C bank, and the like |
| Fitness and health category | Type-2 card | Huawei Health, Keep, and the like |
| Others | Type-3 card | Calculator, alarm clock, and the like |

For example, card security levels are alternatively classified into N types (N>3). Correspondingly, card provider applications are also classified into N types, and a corresponding mapping relationship is formed based on provider data security and the N types of security levels. A type-1 card has a highest security level, and a type-N card has a lowest security level.

In another possible implementation of obtaining the card security level, associatively storing an application package name and card security level information by using a key-value pair structure (map structure) includes: storing the application package name as a key and the card security level information corresponding to the application package name as a value in the map structure. When an application displays a card, a data pair list is queried by using an application package name of the to-be-displayed card as a query condition, to obtain card security level information corresponding to the to-be-queried application package name.

In another possible implementation of obtaining the card security level, the card security level is managed by using a high-security application list. The high-security application list needs to include identification information of an application, such as an application package name and an application ID. The terminal device determines whether a content provider application of the to-be-displayed card is in the high-security application list. If the content provider application of the to-be-displayed card is in the list, the card is a type-1 card. If the content provider application of the to-be-displayed card is not in the list, the card is a type-2 card. It should be noted that the high-security application list may be refreshed, or may be set by a user, or may be preset by a device by default, or may be preset when an application is developed. The high-security application list may be stored locally on the terminal device, or may be stored on a server, and the terminal device obtains the high-security application list from the server. If the high-security application list is stored on the server, determining whether the application is in a range of the high-security application list in the foregoing implementation may be completed on a server side, and the server directly notifies a determining result to a card manager service module of the terminal device.

There are a plurality of specific implementations for setting the card security level. This is not limited in this application.

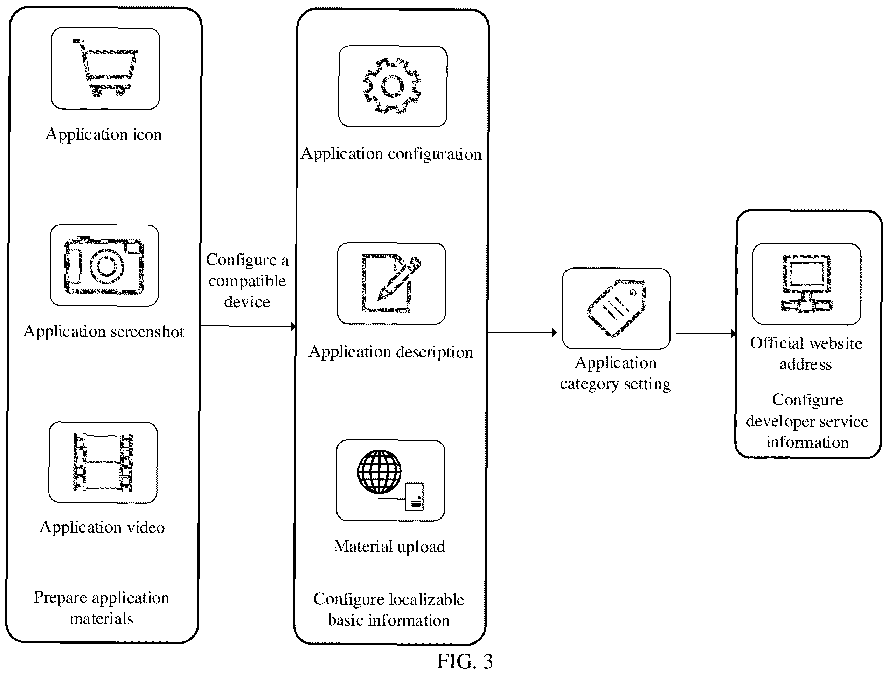

As shown in FIG. 3, an example of a procedure of configuring basic information of an application when the application is released is shown. A developer first needs to prepare materials required by an application, including an application icon, an application screenshot, an application video, and the like. Then, the developer needs to enter an application information page, and configure basic information of the application on the application information page, including a compatible device, localizable basic information, an application category, developer service information, and the like.

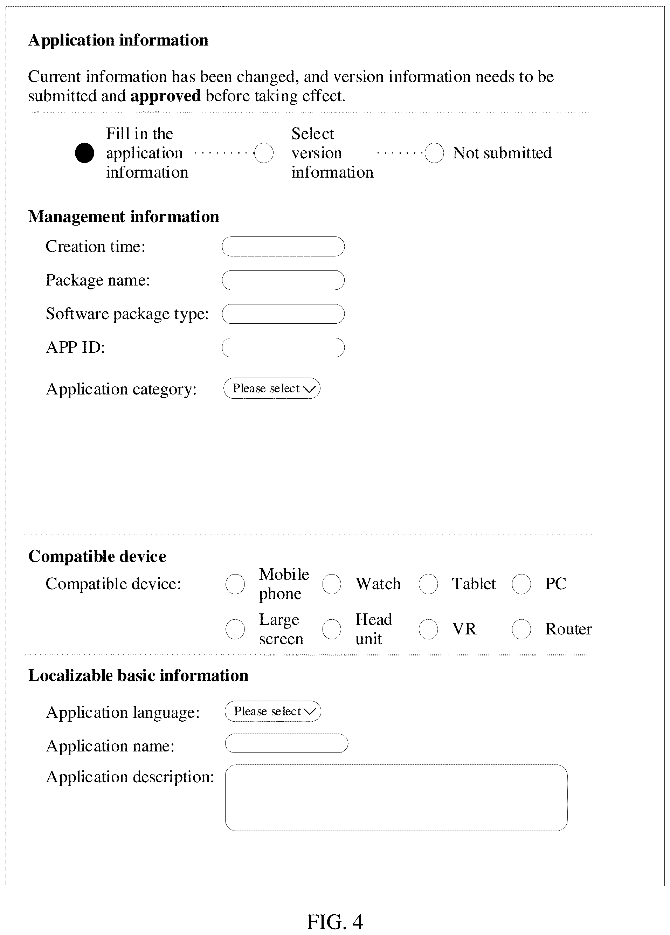

As shown in FIG. 4, an example of basic information configuration of an application (configuration of basic information of an application) that needs to be completed is shown. A developer sets a category of an application. To more accurately locate the category of the application, for example, an application market classifies applications into several categories. For example, common categories are as follows: leisure and puzzle, business strategy, sports competition, board and card games, action shooting, audio and video entertainment, practical tool, social communication, education, news reading, photographing and beautification, food, travel navigation, travel and accommodation, shopping price comparison, financial management, fitness and health, convenient life, and theme personality. To more accurately locate the category of the application, several levels may be set for categories in the application market. Table 3 shows an example of classifying application categories into three levels.

**Table 3 Example of three levels of categories of applications**

| Level-1 category | Level-2 category | Level-3 category |
|---|---|---|
| Game | Leisure and puzzle | Leisure |
| | | Puzzle |
| | Business strategy | Business |
| | | Cultivation |
| | Sports competition | Racing car |
| | | Football |
| | | Basketball |
| Application | Practical tool | Browser |
| | | Alarm clock |
| | | Tool |
| | Financial management | Bank |
| | | Equity fund |
| | | Wealth management |
| | | Bookkeeping |
| | | Loan |
| | Fitness and health | Sports |
| | | Health |
| | | Medical treatment |

As shown in FIG. 4, an application language, an application name, an application description, and the like are configured in a localizable basic Information area, and application materials prepared by the developer are uploaded. If a plurality of languages are configured, the developer needs to switch between the added languages in a "language" drop-down list. The application name is an application name set during application creation by default. A modified application name needs to comply with a naming rule for application release. The application description briefly describes a function, product positioning, and the like of the application.

In a possible embodiment in which card security level classification is implemented, the developer selects a name of a to-be-released application from an application list, and starts to configure basic information of the application on an application information page corresponding to the application; and fills in application creation time, a software package type, a package name, an application ID, a compatible device, localizable basic information, and the like. The localizable basic information includes the application language, the application name, and the application description that are configured. The developer selects a most appropriate application category and determines a type of the application after the application is approved by the application market. A card is an information display form of an application. Therefore, a type of the card may be the same as a type of an application in the application market. Different security levels are matched based on application categories. For an application category having a high information security requirement (such as a financial management application), a security level of a corresponding card also needs to be set to high. Herein, an application category matching the security level may be the level-1 application category, the level-2 application category, the level-3 application category, or an application category with a finer granularity in the example in Table 3.

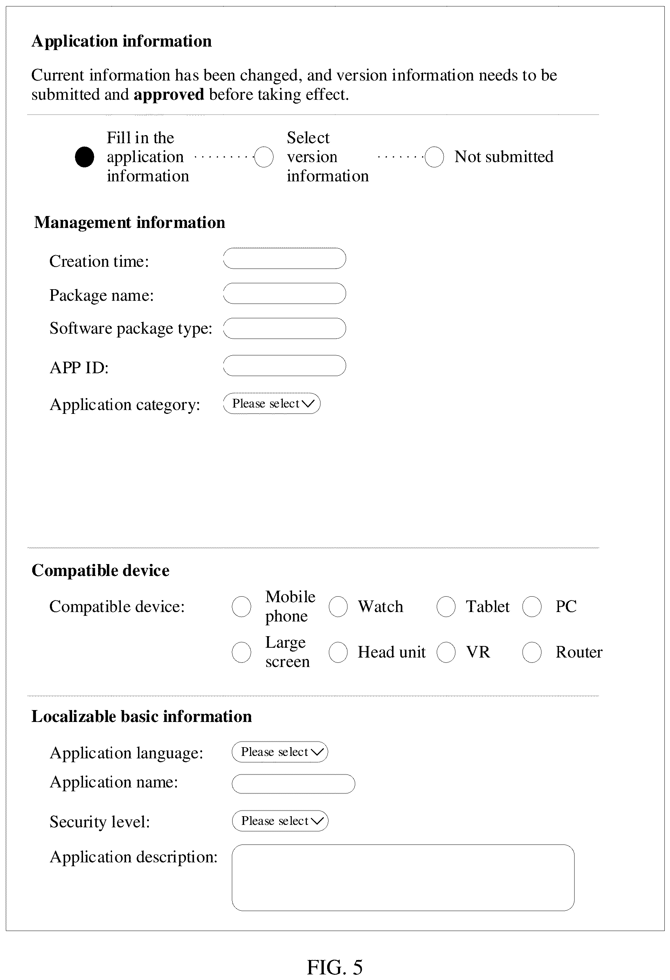

In a possible embodiment in which card security level classification is implemented, the developer selects a name of a to-be-released application from an application list, and starts to configure basic information of the application on an application information page corresponding to the application; and fills in application creation time, a software package type, a package name, an application ID, a supported device, a compatible device, localizable basic information, and the like. As shown in FIG. 5, the localizable basic information includes the application language, the application name, the application description, and the application security level that are configured. The developer selects a most appropriate security level from a localizable basic information module. In an application release process, the application market comprehensively considers the application type and the card security level to approve the card security level and finally determines the card security level.

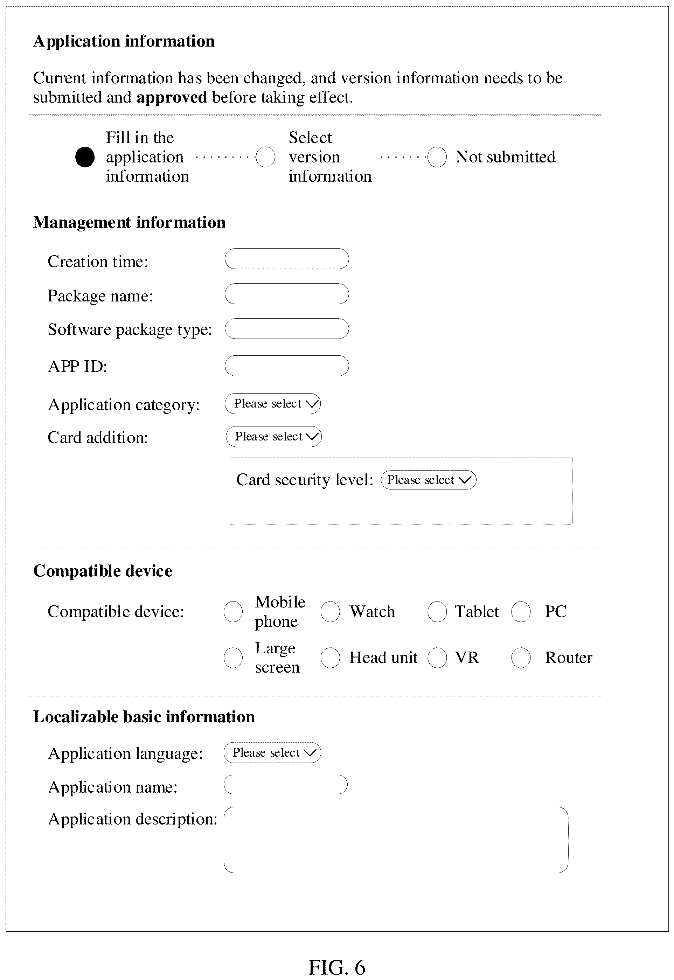

In a possible embodiment in which card security level classification is implemented, the developer selects a name of a to-be-released application from an application list, and starts to configure basic information of the application on an application information page corresponding to the application; and fills in application creation time, a software package type, a package name, an application ID, a supported device, a compatible device, localizable basic information, and the like. As shown in FIG. 6, the application market adds basic information of an application card to the basic information configuration of the application. The basic information of the card includes whether the application needs to apply for a card form and a card security level. The developer selects the basic information configuration of the card that is most suitable for the application. In an application release process, the application market comprehensively considers the application type and the card security level to approve the card security level and finally determines the card security level.

After the application of the developer officially submits an application release application in the application market, the application enters a "released" state after the application is approved by an application market approver. The user may search for and download the corresponding application in the application market. In an application download and installation process, the terminal device may also obtain a card security level of an application that supports a card display form, and subsequent card rendering is separately processed based on the security level.

In a possible embodiment in which card security level classification is implemented, card security level configurations of different applications are preset in the terminal device. A package name or an application name corresponding to an installed application is obtained by the user by using an application preset in the terminal, the application market, or another method, a corresponding card security level in the preset configuration is determined, and subsequent card rendering is separately processed based on the security level. In a possible embodiment in which card security level classification is implemented, card security level configurations of different applications are preset in the terminal device. The preset configuration may be updated when the device is connected to a network, or may be modified and updated by the user.

The card displays important information on a home screen or another application in a card form. The user may use the card by using a shortcut gesture to implement direct service access through lightweight interaction, reducing level jumps. A core concept of the card is to provide easy-to-use and clear information content for the user, integrate an intelligence capability into card experience for the user to select and use, and meet display and self-adaption on different devices.

In this embodiment of this application, the card user may be a system application such as a home screen or a dock bar, or may be a non-system application. This is not specifically limited herein. An example in which the card user is a system application home screen is used.

For example, one or more applications may be installed in the electronic device. A part or all of applications installed in the electronic device may provide service cards. In a possible implementation, some service cards may be preset in the terminal device at delivery. In a possible implementation, the terminal device recommends a corresponding service card to the user based on a user profile. In a possible implementation, the user adds, to the home screen based on a requirement of the user, a service card provided by one or more applications.

A possible manner of adding a card is described. The user may directly add a card by using an application icon on the home screen. For example, the user performs a corresponding interactive operation, for example, touching and holding, on an application icon for which a card needs to be generated. After touching and holding, an option list is popped up. The user taps a service card option in the pop-up list to enter a card addition interface, and taps a button for addition to the home screen, so that the corresponding card is generated in a blank area on the home screen. In a possible implementation, the user may directly perform a home screen interaction operation, for example, touching and holding, in a blank area in which a card needs to be displayed on the home screen. After touching and holding, a corresponding option list is popped up. The user taps a service card option in the pop-up list to enter a card addition interface, selects an application service card that needs to be added, and taps a button for addition to the home screen, so that the corresponding card is generated in the blank area on the home screen.

The user adds a card on a service card center page. For example, the electronic device displays a home screen, the user may slide in a side area or a lower area of the electronic device (or another user interaction operation such as sliding up on an edge), and the electronic device presents the service card center page. The service card center page presents a card that have been used/added to favorites by the user, or is recommended to the user for use. The user may select a card in which the user is interested, and directly add the card to the home screen.

The user may add a card by using the application market. For example, the user may tap an entry of a card service market in the application market to enter the service card application market, and select, in the card market, a service card needed by the user, to add the service card to the home screen.

If the user is not satisfied with a card addition position, the user may perform secondary editing. For example, the user may hold the card and drag the card to a desired position of the user.

If the user is not satisfied with a display effect of the card on the home screen, the user may also perform secondary editing. For example, the user may touch and hold the card to present another style corresponding to the card, and select a preferred style of the user. The user may alternatively customize the card style.

If the user is not satisfied with a card size, the user may also perform secondary editing. For example, the user may zoom in or out the card by pinching fingers to perform adjustment to a user-satisfied size.

The card user in embodiments of this application is a host application that displays card content, and controls the display position of the card in the device. The card user is responsible for managing and controlling an entire life cycle of the card. When a card is added, the card user adds the card corresponding to the application. When a card is deleted, the card user needs to perform a card death notification. When entering the foreground, the card user may update the card by identifying and enabling a refresh status flag. The card user may be a system application, for example, a home screen, a leftmost screen, a drop-down menu, a swipe-up menu, a sidebar application, or a service center, or may be another third-party application, for example, a weather application or an audio and video application.

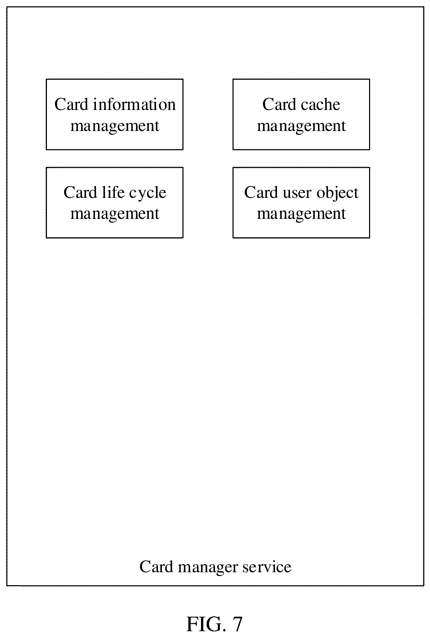

As shown in FIG. 7, a card manager service (Form Manager Service, FMS) in this embodiment of this application is used to manage a resident agent service of a card added in a system, including releasing, managing, using, and periodically refreshing a card object, and the like. In addition, the card manager service is responsible for card cache management. After a card is added to the card manager service, the card manager service caches view information of the card, so that cached data may be directly returned when the card is obtained next time, reducing a latency. The card manager service is responsible for card life cycle management. When a card is switched to the background or blocked, card refresh is suspended. When a card is upgraded or uninstalled, card data is updated and cleared. The card manager service is responsible for managing an object of the card user and managing inter-process communication (Inter-Process Communication, IPC) of the card user, and is used to perform verification based on a request of the user and perform callback processing after card update. The card manager service continuously pays attention to a death notification of the card user and clears a remote object of the user when receiving the death notification of the card user.

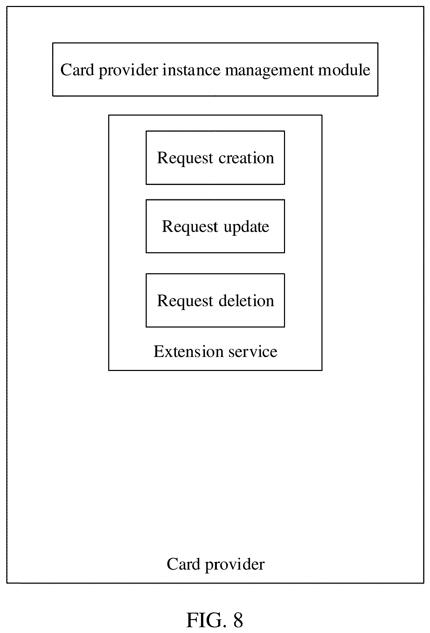

As shown in FIG. 8, the card provider in this embodiment of this application is an application that provides display content of a card, and controls the display content of the card, a control layout of the card, an interaction event on the card, and the like. The card provider developer implements a card provider embodiment management module, and is responsible for performing persistence management on the card allocated by the card manager service. A card provider process is launched by using a broadcast mechanism. The process may be a standalone process or a main process of the application, and may become a cache process after a card service is processed. The card provider developer implements an extension (Extension) service interface to implement corresponding card services of requesting card creation, card update, and card deletion. The card provider not only includes a system application, for example, clock/settings, that is preset at delivery of the terminal device, but also includes a non-system application, for example, weather/NetEase cloud, that is installed later. The card provider may alternatively be embedded in a same application, that is, the application is both the card provider and the card user.

A card rendering service (Form Rendering Service, FRS) in this embodiment is a card rendering process independent of a host process, and is responsible for rendering of all added cards and management and control of card rendering instances. The card rendering service in this embodiment of this application is used to manage the card rendering instance, and a rendering instance is bound to a card of the card user in a one-to-one manner. The card rendering service runs card page code for rendering and sends rendered data to the card corresponding to the card user.

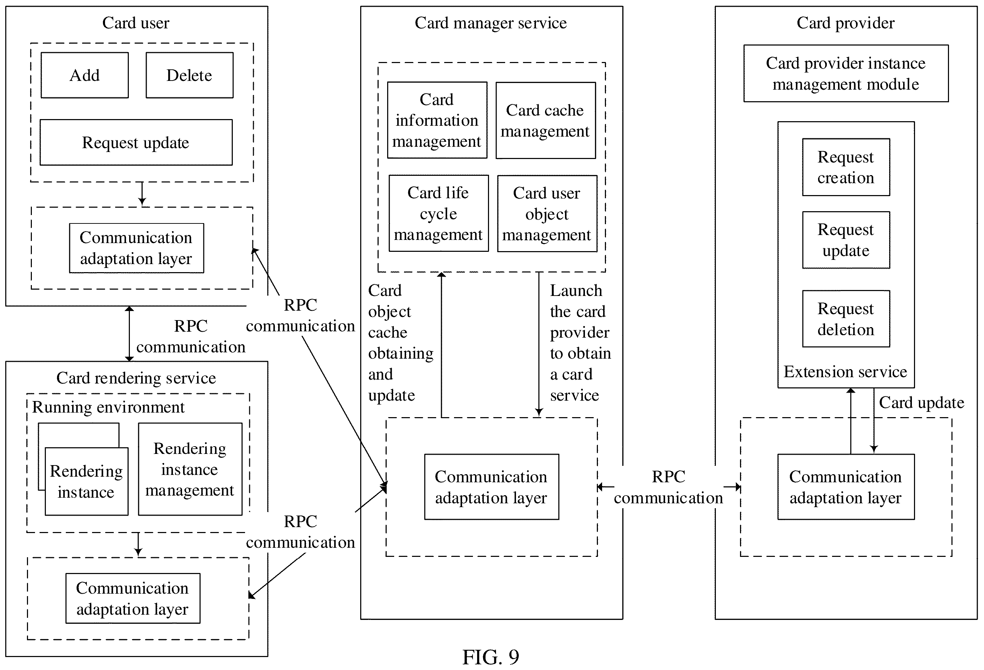

FIG. 9 shows a principle of common card rendering. The card provider needs to create a new card and sends a card creation request to the card manager service through a communication adaptation layer. The request carries card-related information, such as a name, a specification, a layout, and an update policy of a card. After the card management server receives the card creation request, a card cache management module caches obtained card data. When the card user is started, the card user registers with the card manager service, determines, through continuous receiving, that the current card request is card creation, and sends a card rendering request to the card rendering service through the communication adaptation layer. The card rendering service draws and renders a current card and manages a rendering instance. After the card rendering service is completed, a card user object management module of the card manager service manages a new card user object and notifies the card provider that the card is successfully added.

A common card refresh implementation principle is basically consistent with the foregoing card creation principle. A difference is that the card provider sends a card refresh request, and the request needs to carry refreshed data of a card. After the card user discovers the card refresh request, the request is updated to card refresh, and the card rendering service completes card refresh.

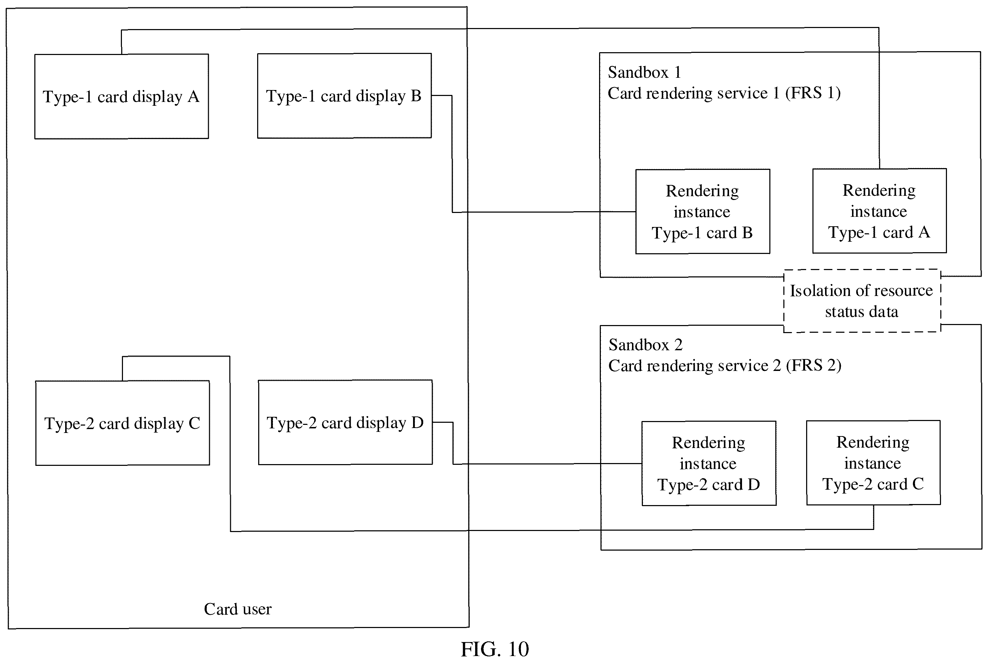

In the embodiment shown in FIG. 10, two or more standalone card rendering service processes are used to complete rendering services of all cards in the device.

A card rendering process is a card display process. Specifically, a host application of a terminal device obtains a file of the card, and an application engine (AppEngine) of the host obtains a current system capability of the terminal device, to run the card to complete the card rendering process. The card manager service maintains a mapping relationship between a rendering process and a host process. When a card needs to be rendered, a corresponding process is allocated for rendering based on a security level of the card. Cards of a same security level are rendered in a same process. After obtaining the card security level, the card manager service determines whether the current device has a standalone card rendering process corresponding to the security level. If the current device has the standalone card rendering process corresponding to the security level, a live (running/sleep) standalone card rendering service process of card security level of the card security level continues to be used for rendering. If the current device does not have the standalone card rendering process corresponding to the security level, a new standalone card rendering service process is created as a card rendering process of the security level.

As shown in FIG. 10, a standalone card rendering service process FRS 1 is responsible for embodiment rendering of all type-1 cards, and a standalone card rendering service process FRS 2 is responsible for embodiment rendering of all type-2 cards. Different processes run in different sandboxes. In this case, card application rendering services of different security levels are implemented by using different standalone rendering processes, so that respective card rendering is separately performed on applications of different security levels in different sandboxes through process isolation. Resource status data of cards of different security levels is isolated in a process isolation manner. Compared with virtual machine isolation of different application cards in FIG. 9, the process isolation has a higher security level. Even if malicious code attacks a virtual machine, standalone rendering process FRS 1 running in different sandboxes cannot affect standalone rendering process FRS 2 running in other sandboxes.

When card security levels are classified into only two types, two standalone card rendering service processes are used for rendering, and each standalone card rendering service process is separately responsible for rendering cards of one type of security level. When card security levels are classified into N types greater than two types, N standalone card rendering service processes may be used to separately render N types of application cards, and cards of a same security level are rendered by using a same standalone card rendering service process.

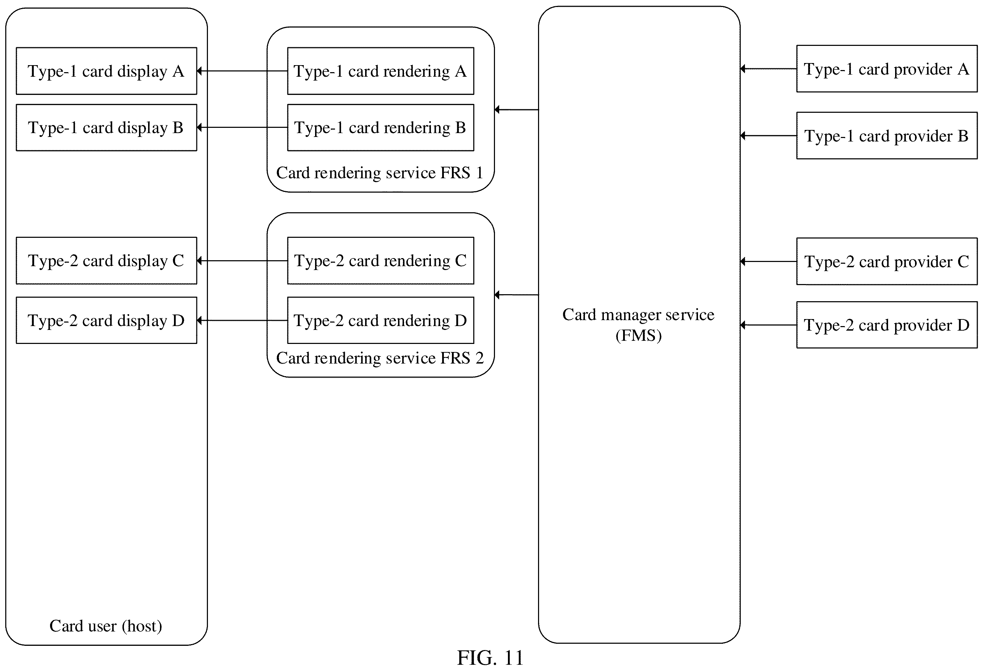

FIG. 11 describes in detail an implementation process of this embodiment. The card provider implements, with the developer to inherit the card service, requests such as creating a card, updating a card, and deleting a card, and provides a corresponding card service. Cards of provider applications are classified into two types based on any classification policy. Cards of a high-security application are type-1 cards, which has a higher requirement on data resource running environment security. Cards of other non-high-security common applications are type-2 cards. Card display A, card display B, card display C, and card display D are card display corresponding to a card provider application A, a card provider application B, a card provider application C, and a card provider application D respectively. The card display A, the card display B, the card display C, and the card display D may be displayed on a same card user application, or may be displayed on different card user applications. The card provider application, the card manager service, the card rendering service, and the card user application communicate with each other through respective communication adaptation layers.

As shown in FIG. 11, when the card provider A sends a request for starting card rendering, after receiving the request, the card manager service determines a security level of the card A and then determines that the card A is a type-1 card. The card manager service determines that the current device does not have a type-1 card rendering service process. Therefore, the card manager service creates a new standalone rendering service process FRS 1 to complete a card rendering service of type-1 card rendering A. When the card provider B sends a request for starting card rendering, after receiving the request, the card manager service determines a security level of the card B and then determines that the card B is a type-1 card. The card manager service determines that the current device has a type-1 card rendering service process FRS 1. Therefore, the card manager service continues to use the standalone rendering service process FRS 1 to complete a card rendering service of type-1 card rendering B.

As shown in FIG. 11, when the card provider C sends a request for starting card rendering, after receiving the request, the card manager service determines a security level of the card C and then determines that the card C is a type-2 card. The card manager service determines that the current device does not have a type-2 card rendering service process. Therefore, the card manager service creates a new standalone rendering service process FRS 2 to complete a card rendering service of type-2 card rendering C. When the card provider D sends a request for starting card rendering, after receiving the request, the card manager service determines a security level of the card D and then determines that the card D is a type-2 card. The card manager service determines that the current device has a type-2 card rendering service process FRS 2. Therefore, the card manager service continues to use the standalone rendering service process FRS 2 to complete a card rendering service of type-2 card rendering D.

The type-1 card rendering service FRS 1 and the type-2 card rendering service FRS 2 are standalone card rendering service processes. The two processes run in two different sandboxes. In a process isolation manner, data resource statuses of application cards of different security levels are completely isolated and mutually independent. After the card rendering service FRS 1 completes rendering, content of type-1 card display A and content of type-1 card display B are displayed on the corresponding card user. After the card rendering service FRS 2 completes rendering, content of type-2 card display C and content of type-2 card display D are displayed on the corresponding card user.

In the foregoing embodiment, in a possible implementation, a card rendering service management module is disposed to centrally manage and allocate card rendering services. After starting card rendering, the card manager service directly sends a rendering request to the card rendering service management module through the communication adaptation layer. The card rendering service management module determines a security level of a currently requested card, and then matches a corresponding card rendering process to perform card rendering.

In the foregoing embodiment, in another possible implementation, the type-1 card provider A and the type-1 card provider B may be a same high-security application, and for rendering of different cards in a same application, a card rendering process of a corresponding security level is also used to perform card rendering. The type-2 card provider application C and the type-2 card provider application D may also be a same common application.

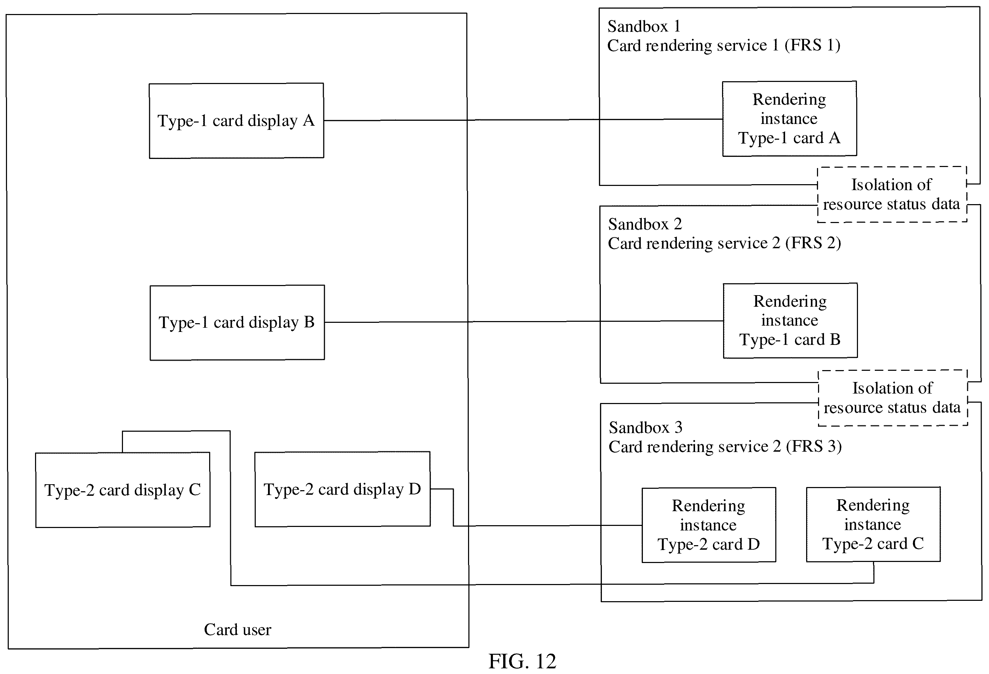

In another embodiment shown in FIG. 12, because the type-1 card has a highest security level requirement, for type-1 cards of a same security level, different provider applications may also use different standalone card rendering processes to perform card rendering.

The card manager service maintains a mapping relationship between a rendering process and a host process. When a card needs to be rendered, a corresponding process is allocated for rendering based on a security level of the card. Because the type-1 card of the highest security level has the highest security requirement, different standalone card rendering processes are used for rendering for different card providers. After obtaining the card security level, the card manager service determines whether the card security level is a type-1 card displayed by the high-security application. If the card security level is not the type-1 card displayed by the high-security application, card rendering is performed in a manner that is the same as that in the foregoing embodiment. If the card security level is the type-1 card displayed by the high-security application, it is determined whether the current device has a standalone card rendering process corresponding to the card provider application. If the current device has the standalone card rendering process corresponding to the card provider application, a live (running/sleep) standalone card rendering service process of the card provider application continues to be used for rendering. If the current device does not have the standalone card rendering process corresponding to the card provider application, a new standalone card rendering service process is created as a card rendering process of the security level of the card provider application.

As shown in FIG. 12, both a card A and a card B are display cards corresponding to high-security applications of a highest security level. In a sandbox 1, a rendering service of the type-1 card A is completed by using a standalone card rendering service process FRS 1, and content is displayed on corresponding user type-1 card display A. In a sandbox 2, a standalone card rendering service process FRS 2 is used to complete a rendering service of the type-1 card B, and content is displayed on corresponding user type-1 card display B. Different rendering processes are used for rendering because the card provider applications of the type-1 cards are different. The card application rendering services of the highest security level are implemented by using different standalone rendering processes, so that the high-security applications separately perform card rendering in different sandboxes. Compared with the rendering manner in FIG. 10, resource status data of different application cards of the high-security applications is isolated in a sandbox process isolation manner. For a non-high-security card provider application, a standalone card rendering service process FRS 3 is responsible for embodiment rendering of all type-2 cards. In addition, a mapping relationship is formed between the rendering process and the card, so that a corresponding process can be found when the card needs to be re-rendered subsequently. Different rendering processes are created for different applications, and rendering is performed separately, so that applications of a same card security level do not have permission to read data from each other.

When card security levels are classified into N types greater than two types, for the type-1 card having the highest security requirement level, different card providers use different standalone rendering service processes to perform rendering. Cards of other security levels may be separately rendered by using N-1 standalone card rendering service processes, and cards of a same security level are rendered by using a same standalone card rendering service process.

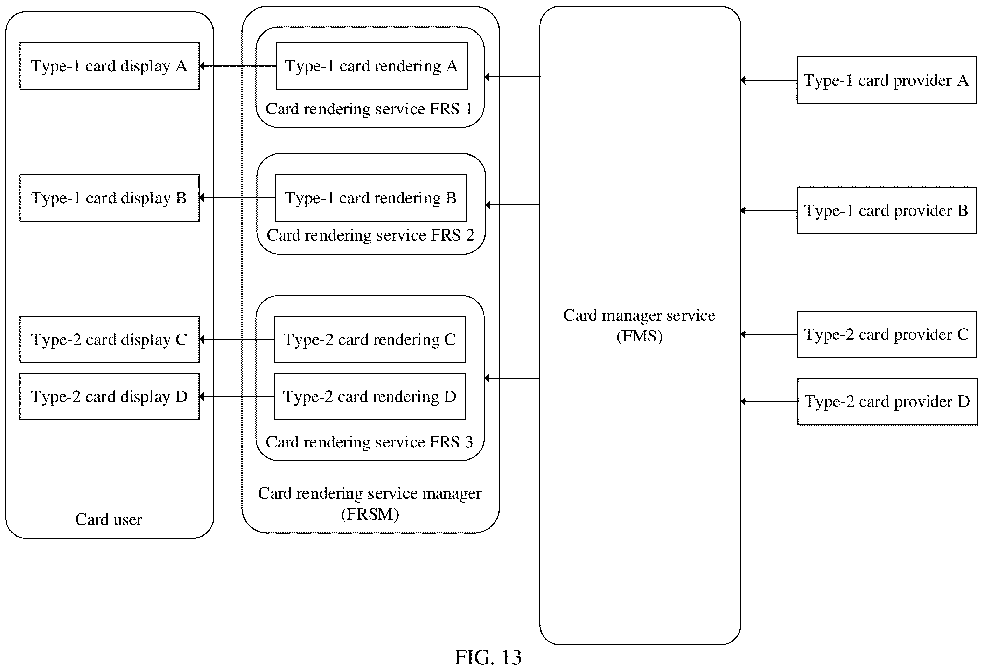

FIG. 13 describes in detail an implementation process of this embodiment. The card provider implements, with the developer to inherit the card service, requests such as creating a card, updating a card, and deleting a card, and provides a corresponding card service. Cards of provider applications are classified into two types based on any classification policy. Cards of a high-security application are type-1 cards, which has a higher requirement on data resource running environment security. Cards of other non-high-security common applications are type-2 cards. Card display A, card display B, card display C, and card display D are card display corresponding to a card provider application A, a card provider application B, a card provider application C, and a card provider application D respectively. The card display A, the card display B, the card display C, and the card display D may be displayed on a same card user application, or may be displayed on different card user applications. The card provider application, the card manager service, the card rendering service, and the card user application communicate with each other through respective communication adaptation layers.

As shown in FIG. 13, when the card provider A sends a request for starting card rendering, after receiving the request, the card manager service determines a security level of the card A and then determines that the card A is a type-1 card. The card manager service determines that the current device does not have a rendering service process of the type-1 card A. Therefore, the card manager service creates a new standalone rendering service process FRS 1 to complete a card rendering service of type-1 card rendering A. When the card provider B sends a request for starting card rendering, after receiving the request, the card manager service determines a security level of the card B and then determines that the card B is a type-1 card. The card manager service determines that the current device does not have a rendering service process of the type-1 card B. Therefore, the card manager service creates a new standalone rendering service process FRS 2 to complete a card rendering service of type-1 card rendering B.

As shown in FIG. 13, when the card provider C sends a request for starting card rendering, after receiving the request, the card manager service determines a security level of the card C and then determines that the card C is a type-2 card. The card manager service determines that the current device does not have a type-2 card rendering service process. Therefore, the card manager service creates a new standalone rendering service process FRS 3 to complete a card rendering service of type-2 card rendering C. When the card provider D sends a request for starting card rendering, after receiving the request, the card manager service determines a security level of the card D and then determines that the card D is a type-2 card. The card manager service determines that the current device has a type-2 card rendering service process FRS 2. Therefore, the card manager service continues to use the standalone rendering service process FRS 3 to complete a card rendering service of type-2 card rendering D.

Different processes run in different sandboxes. A type-1 card A rendering service FRS 1 and the type-1 card B rendering service FRS 2 are standalone card rendering service processes. Different processes perform rendering in different sandboxes. Therefore, the two processes run in two different sandboxes. Sandbox isolation is implemented in a process isolation manner, to ensure that data resource statuses between different applications of the type-1 card security level are completely isolated and mutually independent. After the card rendering service FRS 1 completes rendering, type-1 card display A is displayed on the corresponding card user. After the card rendering service FRS 2 completes rendering, type-1 card display B is displayed on the corresponding card user. After the card rendering service FRS 3 completes rendering, content of type-2 card display C and content of type-2 card display D are displayed on the corresponding card user.

In the foregoing embodiment, in a possible implementation, a card rendering service management module is disposed to centrally manage and allocate card rendering services. After starting card rendering, the card manager service directly sends a rendering request to the card rendering service management module through the communication adaptation layer. The card rendering service management module determines a security level of a currently requested card, and then matches a corresponding card rendering process to perform card rendering.

In the foregoing embodiment, in another possible implementation, the type-1 card provider A and the type-1 card provider B are different high-security applications. The type-2 card provider application C and the type-2 card provider application D may be a same common application.

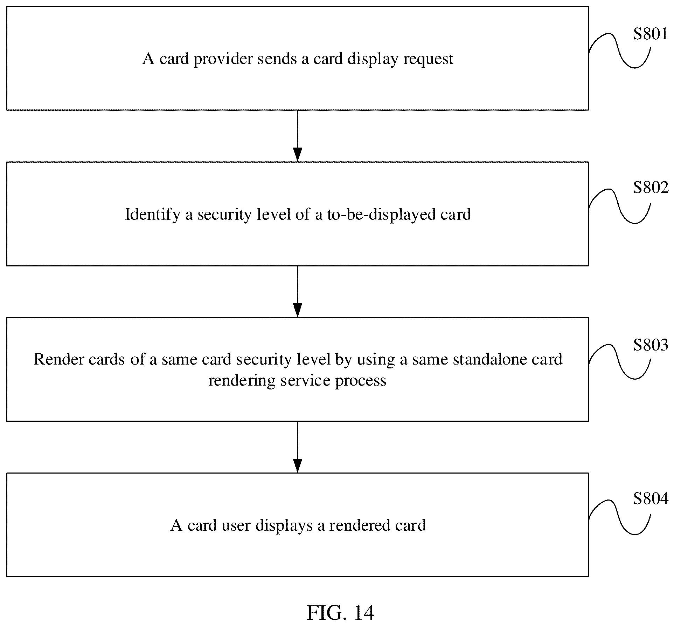

For example, FIG. 14 is a flowchart of an implementation according to another embodiment. As shown in FIG. 14, the method includes S801 to S804.

S801: A card provider sends a card display request.

The card display request is used to start card rendering. In some embodiments, a display request may be sent because data of the provider changes and display data needs to be refreshed. Alternatively, the provider application may load a to-be-displayed card for the first time, and needs to add the card to send the display request.

S802: Identify a security level of the to-be-displayed card.

A terminal device identifies the security level of the to-be-displayed card corresponding to the card provider application. Specific card security level identification may be directly determined by a card manager service module, or a card rendering service management module may be added to the device, and the card rendering service management module determines the security level of the to-be-displayed card.

S803: Render cards of a same card security level by using a same standalone card rendering service process

The card manager service determines the security level of the to-be-displayed card in S802. If a standalone card rendering service process of a same security level already exists, the process is used to continue to render the to-be-displayed card. If the standalone card rendering service process of the security level does not exist, the card manager service creates a new standalone card rendering service process to render the card. The card manager service stores a matching relationship between a to-be-rendered card and a standalone card rendering service process.

In another possible implementation, a card rendering service management module may be added to the device, and the card rendering service management module centrally manages all card rendering service processes. Step S803 may be all completed by the card rendering service management module.

S804: A card user displays a rendered card.

Data of different card providers may be displayed on a same card user or different card users. Different cards of a same card provider may be displayed on a same card user or different card users. After the standalone card rendering service process completes rendering of the to-be-displayed card, the card is displayed on a corresponding card user. The card displayed on the card user displays the data of the card provider, and the displayed card may also support some common user interaction operations.

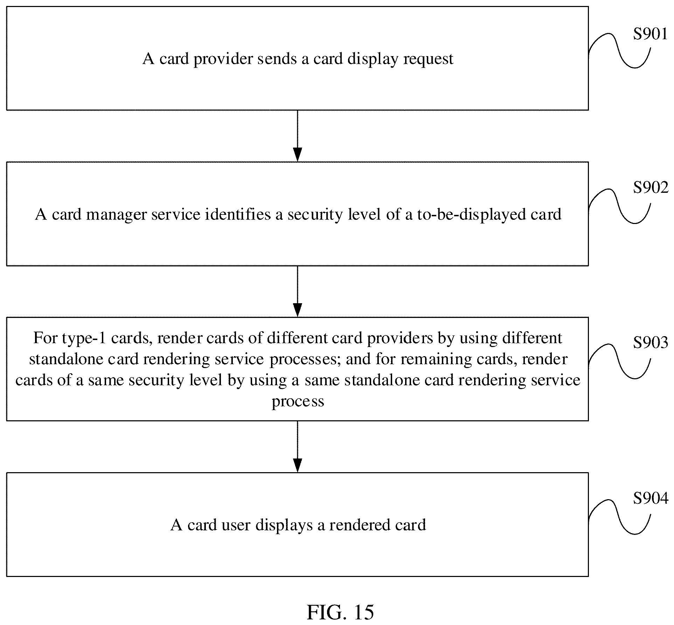

For example, FIG. 15 is a flowchart of an implementation according to another embodiment. As shown in FIG. 15, the method includes S901 to S904.

S901: A card provider sends a card display request.

For a specific implementation, refer to S801.

S902. Identify a security level of a to-be-displayed card.

For a specific implementation, refer to S802.

S903: For type-1 cards, render cards of different card providers by using different standalone card rendering service processes; and for remaining cards, render cards of a same security level by using a same standalone card rendering service process.

The card manager service determines the security level of the to-be-displayed card in S902. If the to-be-displayed card is a type-1 card of a highest security level, and a standalone card rendering service process corresponding to the card provider already exists, the process is used to continue to render the to-be-displayed card. If the standalone card rendering service process corresponding to the card provider does not exist, the card manager service creates a new standalone card rendering service process to render the card corresponding to the card provider. If the to-be-displayed card is a card of another non-type-1 security level, refer to S803 to render the card. The card manager service stores a matching relationship between a to-be-rendered card and a standalone card rendering service process.

In another possible implementation, a card rendering service management module may be added to the device, and the card rendering service management module centrally manages all card rendering service processes. Step S903 may be all completed by the card rendering service management module.

S904: A card user displays a rendered card.

For a specific implementation, refer to S804.

In the present invention, animation rendering and a UI thread are separated. An animation is applied to a rendering node. One control corresponds to one rendering node. An animation of the control is an animation generated by each frame implemented by modifying the attribute of the rendering node. There are some high power consumption or special animations in controls on a card interface. Therefore, in a possible implementation, when different rendering processes are used for rendering based on the security level of the card, cards of a same security level are rendered by using a same rendering process, and rendering permission of different rendering processes may be further limited. A card of a higher security level indicates higher rendering permission of a rendering process, that is, more animation attributes may be set for each rendering node of a card control. Control animation attributes that may be provided by an operating system are classified in Table 4. Attributes: appearance, position size, affine change, and filter, of each control are collectively referred to as general animated attributes. A content drawing attribute animation that is unique to a single control is referred to as a customized drawing attribute. Cards of different security levels have different permission for setting control animation attributes.

**Table 4 Control animation**

| Animation type | Description |
|---|---|
| Appearance | Transparency, round corner, border color, border line width, background color, and shadow |
| Position size | Width/Height, x/y/z coordinate, and x/y/z anchor |
| Affine transformation | Translation, rotation, zooming, and 3D transformation |
| Filter | Blur, color enhancement, grayscale transformation, and the like |
| Customized drawing attribute | In addition to the foregoing general attributes, each control has a unique attribute animation capability, for example, an animation for a percentage change of a circle (circle) component. |

Different animation features may be generated by setting animation attributes of controls, such as a translation animation, a transparent animation, and a looping animation. Setting of a part of animation attributes of controls has great impact on card display and device power consumption. For example, setting of control transparency needs to be strictly managed and controlled. Therefore, the part of animation attributes of controls are open only to a card of a high card security level for setting.

For example, card security levels are classified into two types. A type-2 card is a common ordinary card and supports a general card capability, for example, data display, data refresh, and page jumping. A position size, a filter, and a partial appearance (round corner, border color, border line width, background color, and shadow) of a control may be set for a type-1 card. A rendering process corresponding to the type-2 card performs corresponding control rendering based on setting on a rendering node of a corresponding control during rendering. The type-1 card is a card of a highest security level and has some more complex card capabilities, for example, direct control of an application. The type-1 card also has a capability of rendering some special animation attributes that are not provided by the type-2 card, for example, a looping animation and a transparency attribute. The looping animation causes large power consumption to the device. Therefore, a rendering process corresponding to the type-1 card may render the looping animation. The transparency attribute of the card control may be further set for the type-1 card, and the corresponding rendering process may render an implicit animation by setting the attribute, to display an invisible transparent card.

When the user needs to delete a card, the user may also trigger deletion of the card in a specific interaction manner. When all cards corresponding to a standalone card rendering service process are deleted by the user, the standalone card rendering service process is terminated, and a resource occupied by the process is also released.

To memory management and control, a maximum quantity of rendering processes may be limited. When rendering processes created by the device reaches a preset upper limit, the terminal device may release resources based on a specific release policy. For example, a resource release policy that may be used by the terminal device is preferentially releasing a card rendering process in the background, and a card in the background is a card that is not displayed in the foreground.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in the foregoing embodiments may be implemented by a computer program instructing related hardware. The program may be stored in a computer-readable storage medium. When the program is executed, the procedures of the methods in embodiments may be included. The foregoing storage medium includes any medium that can store program code, such as a ROM, a random access memory RAM, a magnetic disk, or an optical disc.

## Claims

1. A card rendering method, applied to an electronic device, wherein the method comprises:
receiving a first operation of creating a first card, wherein a security level of the first card is a first security level;
drawing the first card by using a first rendering process based on the security level of the first card;
receiving a second operation of creating a second card, wherein a security level of the second card is a second security level; and
drawing the second card by using a second rendering process based on the security level of the second card, wherein the first rendering process is different from the second rendering process, and displaying the first card and the second card.

2. The method according to claim 1, wherein the method further comprises:
obtaining, by the electronic device, the security level of the first card from a server.

3. The method according to claim 1, wherein the method further comprises:
obtaining a first correspondence between an application and a card security level; and
determining the security level of the first card based on the first correspondence.

4. The method according to claim 1, wherein the method further comprises:
obtaining a second correspondence between an application set and an application category, wherein data of the first card is from a first application, and the first application belongs to the application set;
obtaining a third correspondence between the application category and a card security level; and
determining an application category of the first application based on the second correspondence, and determining the security level of the first card based on the application category of the first application and the third correspondence.

5. The method according to claim 4, wherein the method further comprises:
data of the second card is from a second application; and
determining an application category of the second application based on the second correspondence, and determining the security level of the second card based on the application category of the second application and the third correspondence, wherein the security level of the second card is different from the security level of the first card.

6. The method according to any one of claims 1 to 5, wherein the method further comprises:
receiving a third operation of creating a third card, wherein a security level of the third card is the first security level;
drawing the third card by using a third rendering process, wherein the third rendering process is different from the first rendering process; and
displaying the third card.

7. The method according to any one of claims 1 to 6, wherein the method further comprises:
the first rendering process has a rendering capability for a special animation; and
the second rendering process does not have the rendering capability for the special animation, wherein the special animation comprises a transparent animation or a looping animation.

8. An electronic device, wherein the electronic device comprises one or more processors and a memory, the memory is coupled to the one or more processors, the memory is configured to store computer program code, the computer program code comprises computer instructions, and the one or more processors invoke the computer instructions to enable the electronic device to perform the method according to any one of claims 1 to 7.

9. A computer-readable storage medium, comprising instructions, wherein when the instructions are run on an electronic device, the electronic device is enabled to perform the method according to any one of claims 1 to 7.

10. A computer program product, comprising computer-readable instructions, wherein when the computer-readable instructions are executed by one or more processors, the method according to any one of claims 1 to 7 is implemented.
